# EUROPEAN PATENT APPLICATION

(11) **EP 3 730 338 A1**
(43) Date of publication of application: **28.10.2020**
(21) Application number: 18893179.4
(22) Date of filing: 17.12.2018
(51) Int. Cl.: B60L 50/50

(54) **ELECTRIC CAR BATTERY REPLACEMENT SYSTEM HAVING ENERGY SAVING SYSTEM (ESS) AND METHOD FOR OPERATING SAME**

(30) Priority: 19.12.2017 KR 20170175171; 03.12.2018 KR 20180153831
(71) Applicant: Lee, Young Jo, Gyeongsangbuk-do 39294 (KR)
(72) Inventor: Lee, Young Jo, Gyeongsangbuk-do 39294 (KR)
(74) Representative: dompatent von Kreisler Selting Werner - Partnerschaft von Patent- und Rechtsanwälten mbB
(86) International application number: PCT/KR2018/015986
(87) International publication number: WO 2019/124898

(57) **Abstract**

An electric vehicle battery replacement system having an ESS according to an embodiment of the present invention comprises: a battery containment facility for containing a discharged battery of an electric vehicle, and charging and storing the discharged battery; a battery transfer facility for transferring a pair of trays, in which a fully-charged battery that is fully charged by the battery containment facility is received, to a battery replacement place for the electric vehicle, and transferring the pair of trays, in which the discharged battery removed from the electric vehicle is received, into the battery containment facility; a power supply for supplying a driving power for each of the facilities; and a replacement facility operating terminal for providing a facility operating signal for each of the facilities, wherein the power supply receives, from a grid, a first power corresponding to a capacity price and a system marginal price set by the replacement facility operating terminal to use the received first power as a charging power for the discharged battery stored in the battery containment facility.

## Description

### [Technical Field]

The present invention relates to an electric vehicle battery replacement system having an energy saving system (ESS) and a method for operating thereof.

### [Background Art]

As fuels for vehicles, fossil fuels including petroleum such as diesel and gasoline and natural gas such as LNG and LPG are mainly used.

In recent years, since a large amount of exhaust gas which pollutes the environment is discharged when the fossil fuels are used, an electric vehicle (EV) using electricity as an energy source has been spotlighted as an alternative to a fossil fuel vehicle.

As electric vehicles, a battery-powered electric vehicle, a fuel cell electric vehicle using a fuel cell as an electric motor, and a hybrid electric vehicle using both an electric motor and an engine have been developed. In addition, in order to expand and activate the distribution of the electric vehicles, various studies on the construction of electric vehicle charging infrastructures have been conducted.

Electric vehicles are charged through a plug-in scheme. Accordingly, it takes too long time to complete the charging, and thus it is inconvenient for a user to use the electric vehicle, and a charging facility operating company is subject to poor economic efficiency.

In order to solve such problems, electric vehicle battery charging technology in which a discharged battery is exchanged with a fully-charged battery, which is charged in advance, without directly charging the battery of the electric vehicle has been proposed.

According to the electric vehicle battery exchange scheme, there is an advantage that the electric vehicle can be used without wasting an additional time for charging the battery. However, the above scheme has a problem that a separate skilled technician for a battery exchange operation is required.

### [Disclosure]

### [Technical Problem]

One object of the present invention is to provide a device capable of rapidly and safely replacing a discharged battery of an electric vehicle with a fully-charged battery.

In addition, another object of the present invention is to provide a system for receiving a power corresponding to a system marginal price (SMP) set by a user from a grid, storing the received power in an ESS, and using the stored power to charge the discharged battery withdrawn from the electric vehicle upon the charging of the discharged battery of the electric vehicle, and a method for operating the system.

### [Technical Solution]

To achieve the objects described above, according to one embodiment of the present invention, an electric vehicle battery replacement system having an energy saving system (ESS) is suggested. the electric vehicle battery replacement system include: a battery containment facility for containing a discharged battery of an electric vehicle, and charging and storing the discharged battery; a battery transfer facility for transferring a pair of trays, in which a fully-charged battery that is fully charged by the battery containment facility is received, to a battery replacement place for the electric vehicle, and transferring the pair of trays, in which the discharged battery removed from the electric vehicle is received, into the battery containment facility; a power supply for supplying a driving power for each of the facilities; and a replacement facility operating terminal for providing a facility operating signal for each of the facilities, wherein the power supply receives, from a grid, a first power corresponding to a capacity price and a system marginal price set by the replacement facility operating terminal to use the received first power as a charging power for the discharged battery stored in the battery containment facility.

To achieve the objects described above, according to one embodiment of the present invention, a method for operating an electric vehicle battery replacement system having an energy saving system (ESS) is suggested. the method include: a power supply step of providing, by the power supply, a grid power or a charging power of the ESS to each of the facilities; and a battery replacement step of replacing the discharged battery of the electric vehicle by operating each of the facilities with the supplied power, wherein the battery replacement step includes: providing, by the replacement facility management terminal, the facility operating signal for battery replacement when a battery replacement request is input through an input unit or a terminal of an electric vehicle driver after the electric vehicle enters a preset battery replacement position; transferring, by the battery transfer device, the pair of trays on which the fully-charged battery is seated to the battery replacement position when a battery storage device seats the fully-charged battery on a second tray of the pair of trays located on a first floor based on the facility operating signal; providing a contact signal to the replacement facility management terminal by a detection sensor provided at the replacement position, and providing battery transfer completion information through a notification sound or to the terminal of the electric vehicle driver by the replacement facility terminal when the pair of trays is transferred to the replacement position; moving, by the battery transfer device, the pair of trays to a position where the discharged battery is withdrawn, and seating the discharged battery on a first tray of the pair of trays when the discharged battery is withdrawn from the electric vehicle; measuring, by a residual power level detection unit provided in the first tray, a residual power level of the discharged battery, and transmitting a measurement result to the replacement facility management terminal; calculating, by the replacement facility management terminal, a battery replacement fee according to a residual power level measurement value, and providing the calculated battery replacement fee to a displayer or the terminal of the electric vehicle driver; unlocking a locking function of the second tray on which the fully-charged battery is seated through a control of the replacement facility management terminal, and introducing the fully-discharged battery into the electric vehicle by a battery replacer for the electric vehicle when payment of a battery replacement fee is completed; and transferring, by the battery transfer unit, the pair of trays on which the discharged battery is seated to the battery storage device when the battery replacement is completed.

### [Advantageous Effects]

According to an electric vehicle battery replacement system having an ESS function and a method for operating thereof according to one embodiment of the present invention, since an energy saving system (ESS) is used, a grid power supplied to a first power line is used as a driving power in a first time period (daytime), a charging power of the ESS supplied to a second power line is applied in a second time period (night, dawn) so as to be used as a charging source for a discharged battery stored in a charging module, and the charging power stored in the ESS is used as a driving power of each facility in a power peak time period, so that each facility can be operated with a power at a low cost.

In addition, according to the electric vehicle battery replacement system having the ESS function and the method for operating thereof according to one embodiment of the present invention, the discharged battery of the electric vehicle can be easily replaced (exchanged) with a fully charged battery.

Through the above-described advantages, an existing series of processes of individually identifying a type of the discharged battery of the electric vehicle by an operator, separating the discharged battery from the electric vehicle, and directly performing the replacement by the operator can be automated.

### [Description of Drawings]

FIG. 1 is a view illustrating an electric vehicle battery replacement system having an ESS according to one embodiment of the present invention.
FIG. 2 is a view illustrating the configuration of the ESS shown in FIG. 1.
FIGS. 3 to 6 are views illustrating a battery containment facility and a battery transfer facility shown in FIG. 1.
FIG. 7 is a flowchart showing a method for operating an electric vehicle battery replacement system having an ESS according to one embodiment of the present invention.
FIG. 8 is a flowchart of S700 shown in FIG. 7.

### * Description of Reference Numerals *

100: Electric vehicle battery replacement system having ESS function
200: Power supply
210: Smart power meter
220: Power line switch
230: ESS
231: EMS
232: PCS
233: BMS
234: Battery
300: Battery containment facility
310: Charging block
311: Charging unit
311a: Residual charging amount detection unit
320: Battery position moving unit
330: Drive control unit
400: Battery transfer facility
410: Horizontal moving unit
420: Lifting/lowering unit
600: Replacement facility operating terminal

### [Mode for Invention]

### [Best Mode]

Terms used herein will be described in brief, and the present invention will be described in detail.

Although the terms used in the present disclosure are preferably selected with general terms which are widely used at present under the consideration of functions in the present invention, different terms may be used according to the intention of those of ordinary skill in the art, judicial precedents, or introduction of new technology. In addition, in a specific case, one or more terms are selected arbitrarily by the applicant. And in this case, the meaning of the terms will be disclosed in a corresponding part of the detailed description of the invention in detail. Thus, the terms used in the present disclosure should be defined not by the simple names of the terms, but by the meaning of the terms and the contents throughout the present disclosure.

Throughout the specification, when a certain part 'includes' a certain element, unless explicitly described to the contrary, it means that other elements may be further included but not excluded. In addition, the term disclosed herein such as "unit" or "module" indicates a unit for processing at least one function or operation, and may be implemented in hardware, software, or a combination of hardware and software.

Hereinafter, embodiments of the present invention will be described in detail with reference to the accompanying drawings to allow those of ordinary skill in the art to easily carry out the embodiments. However, the present invention may be implemented in various other forms, and is not limited to the embodiments described herein. In addition, in order to clearly describe the present invention, parts that are not associated with the description have been omitted from the drawings, and like reference numerals refer to like parts throughout the specification.

Hereinafter, an electric vehicle battery replacement system having an ESS function and a method for operating thereof according to one embodiment of the present invention will be described in detail based on the accompanying drawings.

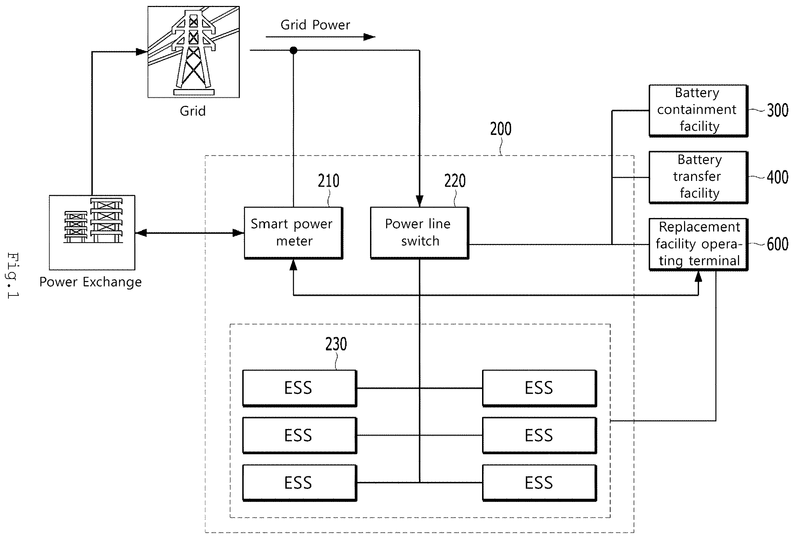

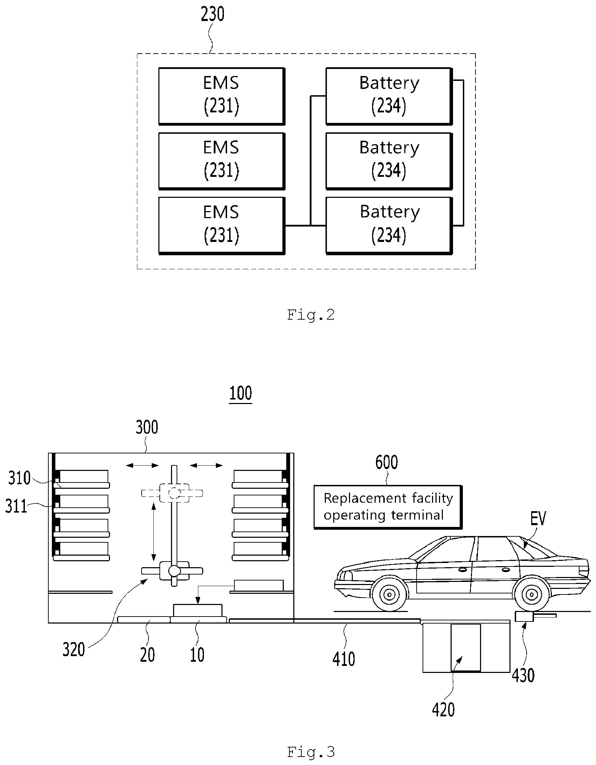

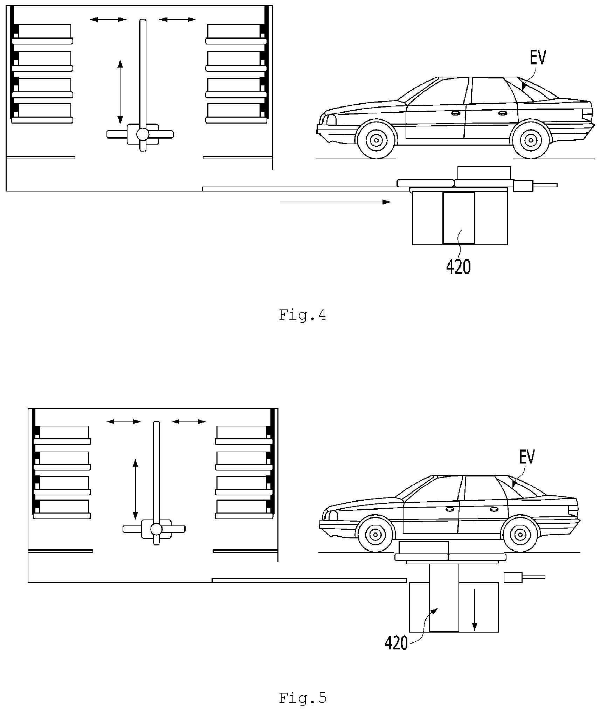

FIG. 1 is a view illustrating an electric vehicle battery replacement system having an ESS according to one embodiment of the present invention, FIG. 2 is a view illustrating the configuration of the ESS shown in FIG. 1, and FIGS. 3 to 6 are views illustrating a battery containment facility and a battery transfer facility shown in FIG. 1.

For reference, the electric vehicle battery replacement system according to one embodiment of the present invention may be a system that performs replacement on an electric vehicle, in which an electric battery may be automatically introduced and withdrawn through a bottom portion of the electric vehicle, a device for withdrawing a discharged internal battery through an operation button of a driver may be provided, and a battery replacer (not shown) for replacing the discharged internal battery with a fully-charged battery transferred through a battery transfer device, which will be described below, may be provided.

The battery replacer may withdraw the battery in the electric vehicle through one of various schemes such as a pressurization scheme, a sliding scheme, and a discharge scheme, or may insert a fully-charged external battery into the electric vehicle.

In other words, the electric vehicle disclosed in the present disclosure may be an electric vehicle having a function of separating a battery terminal when the driver presses the operation button, and withdrawing the discharged battery to an outside by a battery manipulator through the above scheme when a battery accommodation portion is opened.

Referring to FIG. 1, an electric vehicle battery replacement system 100 having the ESS function according to the present disclosure may include a power supply 200, a battery containment facility 300, a battery detachment facility 400, a battery transfer facility 500, and a replacement facility operating terminal 600.

The power supply may supply a first power applied from a grid to each of the facilities in a first time period, and may charge and discharge a second power applied from the grid in a second time period.

In more detail, the power supply 200 may include a smart power meter 210, a power line switch 220, and an energy saving system (ESS) 230.

The smart power meter 210 may communicate with Power Exchange through a network, and may provide measurement information, which is obtained by measuring a level of a power applied from a power grid, power consumption for each time period, and a power consumption cost, to a replacement facility operating terminal which will be described below.

In addition, the smart power meter 210 may request the supply of a power corresponding to a power capacity price and a system marginal price set by a manager to Power Exchange through the network.

The power line switch 220 may function to switch the first power line and the second power line.

In this case, the first power line and the second power line may be connected to a power source unit (not shown) of each of the facilities, the first power line may be a power line connected to the grid, and the second power line may be a power line connected to a battery of the ESS which will be described below.

Next, the ESS 230 may include an energy management system (EMS) 231, a power conditioning system (PCS) 232, a battery management system (BMS) 233, and a plurality of batteries 234.

The EMS 231 may control operations of the PCS 232 and the BMS 233 according to preset charging/discharging scheduling information, and may calculate a level of a power that may be discharged from the battery 234 to provide the power.

The EMS 231 may include a wired/wireless communication module (not shown) which enables communication with the replacement facility operating terminal 600. The communication module may support at least one of various communication schemes such as a wired local area network (LAN), a wireless LAN, Wi-Fi, Bluetooth, and Wi-Fi Direct. In the embodiment of the present invention, the communication scheme used for the communication between the replacement facility operating terminal 600 and the EMS 231 is not limited.

The EMS 231 may be a power load, and may function to predict power consumption in each of the facilities consuming a power and to control the charging/discharging of the battery 234 through the control of the PCS 232.

The PCS 232 may be a power conversion system, and may serve to complement energy conversion characteristics based on the fact that characteristics upon charging of a power are different from energy conversion characteristics upon discharging of the power.

In detail, the PCS 232 may operate to receive a power from the grid, store the power in the battery 234, and discharge the stored charging power to the second power line, and may perform a function of converting the charging power to have power characteristics (AC/DC, voltage, frequency, etc.) suitable for characteristics of the facilities when discharging the charging power to the second power line.

The BMS 233 may be a battery management system, and may perform a function of notifying a state of charge and the like of each battery cell through an external interface and protecting the battery cell from being exposed to conditions such as overcharge/overdischarge/overtemperature/low temperature/overcurrent.

The battery 234 may be charged with the power converted into a certain form through the PCS 232, and may discharge the charged power.

The battery 234 may be a secondary battery which can be charged and discharged, and may be formed by using lithium ions, sodium sulfate, and the like as main materials.

Next, the battery containment facility 300 may use the grid power supplied to the first power line as a driving power in the first time period, and receive a charging power of the ESS supplied to the second power line in the second time period so as to operate to charge the discharged battery stored in a charging module which will be described below.

For reference, the battery containment facility 300 may collect, charge, and store the discharged battery of the electric vehicle.

In more detail, the battery containment facility 300 may include a plurality of charging blocks 310, a battery position moving unit 320, and a drive control unit 330.

The charging blocks 310 may have a stacked structure, in which a first floor may be a floor for introducing and withdrawing the discharged battery and the fully-charged battery.

In more detail, a pair of trays may be provided on the first floor, a first tray 10 of the pair of trays may be a tray for receiving the discharged battery of the electric vehicle, and a second tray 20 of the pair of trays may be a tray for receiving the fully-charged battery.

For reference, when the battery of the electric vehicle is replaced, the pair of trays may be transferred to the electric vehicle with the fully-charged battery received therein. A process of replacing the discharged battery with the fully-charged battery will be described below.

Meanwhile, each of the battery charging blocks 310 may include a charging unit 311.

The charging unit 311 may include one of a DC CHAdeMO charging adapter, an AC three-phase charging adapter, or a DC Combo charging adapter. In addition, the charging unit 311 may charge the battery through a wireless charging scheme. In other words, the charging unit 311 may charge the battery by using wired or wireless charging technology.

In addition, the charging unit 311 may include a residual power level detection unit 311a for detecting a residual power level of the battery.

Residual power level information detected by the residual power level detection unit 311a may be provided to a replacement facility management terminal 600, which will be described below, and the replacement facility management terminal 600 may calculate a charging fee based on the residual power level information.

Next, the battery position moving unit 330 may function to transfer the discharged battery transferred to the first tray 10 of the pair of trays to the charging module and/or to transfer the fully-charged battery which is fully charged by the charging module to the second tray 20 of the pair of trays based on a control signal of the drive control unit 330. The battery position moving unit 330 may be a cantilever capable of moving in three axes, or a manipulator capable of sliding up, down, left, and right.

Next, the drive control unit 330 may control an operation of the battery positon moving unit 1230 based on an operation signal of the replacement facility management terminal 600.

Next, the battery transfer facility 400 may transfer the pair of trays located on the first floor of the battery containment facility 300 to a battery replacement position for the electric vehicle based on a battery transfer signal of the replacement facility management terminal 600.

The first tray 20 of the transferred pair of trays may be an empty tray for receiving the discharged battery of the electric vehicle, and the second tray 10 may be a tray for receiving the fully-charged battery.

In more detail, the battery transfer facility 400 may include a horizontal moving unit 410 and a lifting/lowering unit 420.

When the pair of trays transferred from the battery containment facility 300 through the horizontal moving unit 410 is transferred to the battery replacement position for the electric vehicle, the lifting/lowering unit 420 may function to lift and lower the pair of trays. The lifting/lowering unit 420 may include a contact detection unit (not shown) for detecting the pair of trays.

The contact detection unit (not shown) may function to detect the pair of trays when the pair of trays reaches and makes contact with the battery replacement position, and to provide a detected detection signal to the replacement facility management terminal 600 which will be described below.

Meanwhile, when the pair of trays is lifted and lowered at the battery replacement position, the discharged battery withdrawn through the battery replacer for the electric vehicle may be seated on the first tray 10, and the fully-charged battery of the second tray 20 may enter the electric vehicle.

When the replacement of the battery of the electric vehicle is completed, the lifting/lowering unit 420 may lower the pair of trays to a preset position.

The horizontal moving unit 410 may slidably transfer the pair of trays lowered by the lifting/lowering unit 420 to an inlet/outlet of the battery containment facility 300.

Meanwhile, the first tray 10 of the pair of trays may include a residual level detection unit for detecting a residual level of the discharged battery, and the residual level detection unit may provide detected residual level information of the discharged battery to the replacement facility management terminal.

Next, the replacement facility management terminal 600 may be a terminal interworking with an application installed in a terminal of an electric vehicle driver, and may perform a series of processes related to costing and system control for replacing the battery of the electric vehicle.

In more detail, when a battery replacement request is received from an input device or the terminal of the electric vehicle driver, the replacement facility management terminal 2300 may control operations of the battery containment facility 300 and the battery transfer facility 400 for replacing the battery of the electric vehicle.

In addition, the replacement facility management terminal 600 may calculate a replacement fee according to a residual power level of the discharged battery of the electric vehicle, and may provide the calculated replacement fee to the terminal of the electric vehicle driver.

Hereinafter, a method for operating an electric vehicle battery replacement system having an ESS according to one embodiment of the present invention will be described in more detail.

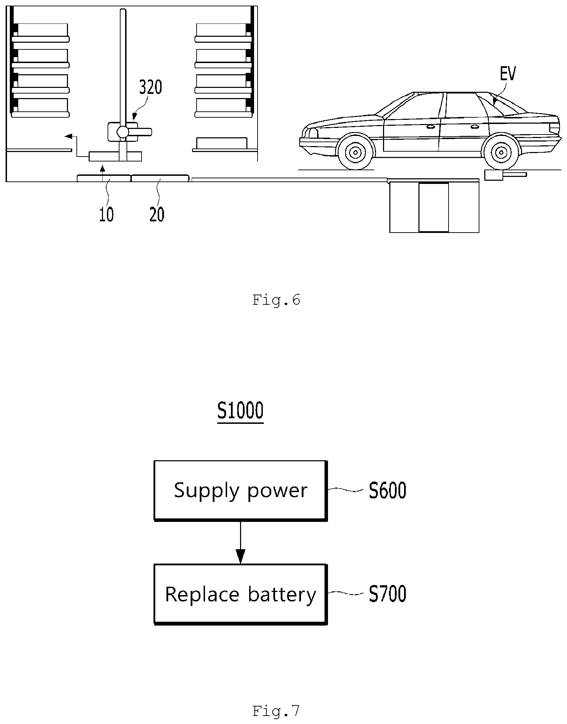

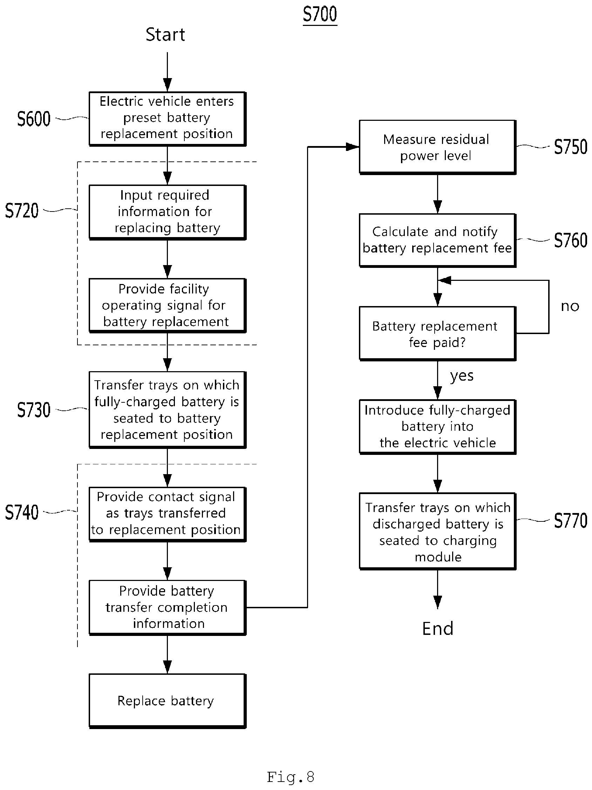

FIG. 7 is a flowchart showing a method for operating an electric vehicle battery replacement system having an ESS according to one embodiment of the present invention, and FIG. 8 is a flowchart of S700 shown in FIG. 7.

Referring to FIG. 7, a method for operating an electric vehicle battery replacement system having an ESS (S1000) according to one embodiment of the present invention may include a power supply step S600 and a battery replacement step S700.

The power supply step S600 may be a step of supplying a grid power and a power of the ESS to the facilities.

The power supply step S600 may include switching, by a replacement facility management terminal 600, a power line switch unit 220 of a power supply 200 in a first time period, and allowing the grid power to be supplied to a first power line as the first power line is connected to a grid.

The power supply step S600 may include controlling, by the replacement facility management terminal 600, the power line switch unit 220 to be switched so as to connect a second power line to a battery of the ESS at a power peak time period (12 o'clock to 14 o'clock) in the first time period to allow a charging power of the ESS to be applied to the second power line.

The power supply step S600 may include receiving, by the power supply 200, a power corresponding to a power capacity price and a system marginal price set by the replacement facility management terminal 600 from the grid in a second time period (1 o'clock to 4 o'clock) to store the received power in the battery of the ESS, and supplying the charging power stored in the ESS to a charging module so that a discharged battery stored in a battery containment facility 300 may be charged.

Next, in the battery replacement step S700, after an electric vehicle enters a preset battery replacement position (S710), when a battery replacement request is input through an input unit or a terminal of an electric vehicle driver, the replacement facility management terminal 600 may provide a facility operating signal for battery replacement (S720).

In this case, when the battery containment facility 300 seats the fully-charged battery on a second tray 20 of the pair of trays located on a first floor based on the facility operating signal, a battery transfer facility 400 may transfer a pair of trays on which a fully-charged battery is seated to the battery replacement position (S730).

When the pair of trays is transferred to the replacement position, a detection sensor provided at the replacement position may provide a contact signal to the replacement facility management terminal 600, and the replacement facility management terminal 600 may provide battery transfer completion information through a notification sound or to the terminal of the electric vehicle driver (S740).

Thereafter, when the discharged battery is withdrawn from the electric vehicle, the battery transfer device may move the pair of trays to a position where the discharged battery is withdrawn, and may seat the discharged battery on a first tray 10 of the pair of trays.

Subsequently, a residual power level detection unit (not shown) provided in the first tray may measure a residual power level of the provided discharged battery, and may provide a measurement result (a residual power level measurement value) to the replacement facility management terminal 600 (S750).

The replacement facility management terminal 600 may calculate a battery replacement fee according to the residual power level measurement value, and may provide the calculated battery replacement fee to a displayer or the terminal of the electric vehicle driver (S760).

When payment of the battery replacement fee is completed, a locking function of the second tray on which the fully-charged battery is seated may be unlocked through a control of the replacement facility management terminal 2300. Then, a user may introduce the fully-charged battery into the electric vehicle by using a replacement manipulator for the electric vehicle.

When the replacement is completed, the battery transfer unit 400 may transfer the pair of trays on which the discharged battery is seated into the battery containment facility 300 (S770), and the battery containment facility 300 may transfer the discharged battery to the charging module.

Therefore, according to an electric vehicle battery replacement system having an ESS function and a method for operating thereof according to one embodiment of the present invention, since an energy saving system (ESS) is used, a grid power supplied to a first power line is used as a driving power in a first time period (daytime), a charging power of the ESS supplied to a second power line is applied in a second time period (night, dawn) so as to be used as a charging source for a discharged battery stored in a charging module, and the charging power stored in the ESS is used as a driving power of each facility in a power peak time period, so that each facility can be operated with a power at a low cost.

In addition, according to the electric vehicle battery replacement system having the ESS function and the method for operating thereof according to one embodiment of the present invention, the discharged battery of the electric vehicle can be easily replaced (exchanged) with a fully charged battery.

Through the above-described advantages, an existing series of processes of individually identifying a type of the discharged battery of the electric vehicle by an operator, separating the discharged battery from the electric vehicle, and directly performing the replacement by the operator can be automated.

As used herein, the term "unit" generally refers to a computer-related entity that is hardware, a combination of software and hardware, software, or running software. For example, an element may be, but is not limited to, a process executed on a processor, a processor, an object, an executable, an execution thread, a program, and/or a computer. For example, both a controller and an application executed on the controller may be elements. One or more elements may be included in a process and/or an execution thread, and an element may be localized on one computer or distributed among two or more computers.

In addition, at least one processing unit and memory may be included. In this case, the processing unit may include, for example, a central processing unit (CPU), a graphics processing unit (GPU), a microprocessor, an application-specific integrated circuit (ASIC), a field programmable gate array (FPGA), and the like, and may have a plurality of cores. The memory 1120 may be a volatile memory (e.g., a random access memory (RAM), etc.), a non-volatile memory (e.g., a read-only memory (ROM), a flash memory, etc.), or a combination thereof.

As described above, preferred embodiments of the present invention have been disclosed in the present specification and drawings, and specific terms used therein are merely used in a general sense in order to clearly describe the technical contents of the present invention and help understanding of the present invention, but are not intended to limit the scope of the present invention. It will be apparent to those skilled in the art to which the present invention pertains that various modifications can be implemented based on the technical spirit of the present invention in addition to the embodiments disclosed herein.

## Claims

1. An electric vehicle battery replacement system having an energy saving system (ESS) **characterized in that** the electric vehicle battery replacement system comprises:
a battery containment facility for containing a discharged battery of an electric vehicle, and charging and storing the discharged battery;
a battery transfer facility for transferring a pair of trays, in which a fully-charged battery that is fully charged by the battery containment facility is received, to a battery replacement place for the electric vehicle, and transferring the pair of trays, in which the discharged battery removed from the electric vehicle is received, into the battery containment facility;
a power supply for supplying a driving power for each of the facilities; and
a replacement facility operating terminal for providing a facility operating signal for each of the facilities,
wherein the power supply receives, from a grid, a first power corresponding to a capacity price and a system marginal price set by the replacement facility operating terminal to use the received first power as a charging power for the discharged battery stored in the battery containment facility.

2. The electric vehicle battery replacement system of claim 1, wherein the battery containment facility includes:
a containment portion partitioned into a plurality of charging blocks to charge the discharged battery, which is transferred through the pair of trays, within the charging block; and
a manipulator for moving the discharged battery into the charging space, and
wherein the manipulator operates to withdraw the fully-charged battery which is charged within the charging space or to introduce the discharged battery into the charging space based on the facility operating signal.

3. The electric vehicle battery replacement system of claim 2, wherein the charging block includes a charging adapter which operates through a charging scheme including one of DC CHAdeMO, AC three-phase, or DC Combo.

4. The electric vehicle battery replacement system of claim 2, wherein the battery transfer facility includes:
a position detection unit for detecting whether the pair of trays transferred from the battery containment device is located at a first point;
a lifting/lowering unit for vertically moving the pair of trays; and
a horizontal transfer unit connected between the battery containment facility and the lifting/lowering unit to transfer the pair of trays.

5. The electric vehicle battery replacement system of claim 2, wherein the power supply includes:
a smart power meter interworking with Power Exchange to request supply of the first power corresponding to the power capacity price and the system marginal price set by the replacement facility operating terminal in the second time period; and
the energy saving system which receives the first power from the grid to store the first power in the second time period, and discharges the stored first power to the discharged battery located in the charging block in a first time period.

6. A method for operating an electric vehicle battery replacement system having an energy saving system (ESS), in which the electric vehicle battery replacement system includes: a battery containment facility for containing a discharged battery of an electric vehicle, and charging and storing the discharged battery; a battery transfer facility for transferring a pair of trays, in which a fully-charged battery that is fully charged by the battery containment facility is received, to a battery replacement place for the electric vehicle, and transferring the pair of trays, in which the discharged battery removed from the electric vehicle is received, into the battery containment facility; a power supply for supplying a driving power for each of the facilities; and a replacement facility operating terminal for providing a facility operating signal for each of the facilities, **characterized in that** the method comprises:
a power supply step of providing, by the power supply, a grid power or a charging power of the ESS to each of the facilities; and
a battery replacement step of replacing the discharged battery of the electric vehicle by operating each of the facilities with the supplied power,
wherein the battery replacement step includes:
providing, by the replacement facility management terminal, the facility operating signal for battery replacement when a battery replacement request is input through an input unit or a terminal of an electric vehicle driver after the electric vehicle enters a preset battery replacement position;
transferring, by the battery transfer device, the pair of trays on which the fully-charged battery is seated to the battery replacement position when a battery storage device seats the fully-charged battery on a second tray of the pair of trays located on a first floor based on the facility operating signal;
providing a contact signal to the replacement facility management terminal by a detection sensor provided at the replacement position, and providing battery transfer completion information through a notification sound or to the terminal of the electric vehicle driver by the replacement facility terminal when the pair of trays is transferred to the replacement position;
moving, by the battery transfer device, the pair of trays to a position where the discharged battery is withdrawn, and seating the discharged battery on a first tray of the pair of trays when the discharged battery is withdrawn from the electric vehicle;
measuring, by a residual power level detection unit provided in the first tray, a residual power level of the discharged battery, and transmitting a measurement result to the replacement facility management terminal;
calculating, by the replacement facility management terminal, a battery replacement fee according to a residual power level measurement value, and providing the calculated battery replacement fee to a displayer or the terminal of the electric vehicle driver;
unlocking a locking function of the second tray on which the fully-charged battery is seated through a control of the replacement facility management terminal, and introducing the fully-discharged battery into the electric vehicle by a battery replacer for the electric vehicle when payment of a battery replacement fee is completed; and
transferring, by the battery transfer unit, the pair of trays on which the discharged battery is seated to the battery storage device when the battery replacement is completed.
